# FASCICULE DE BREVET EUROPEEN

(11) **EP 2 500 267 B1**
(45) Date de publication et mention de la délivrance du brevet: **02.03.2016**
(21) Numéro de dépôt: 12158619.2
(22) Date de dépôt: 08.03.2012
(51) Int. Cl.: B64C 13/50

(54) **Surveillance d'un actionneur de commande de vol d'un aéronef**
Überwachung eines Stellglieds zur Flugsteuerung eines Luftfahrzeugs
Monitoring of a flight control actuator of an aircraft

(30) Priorité: 16.03.2011 FR 1152152
(43) Date de publication de la demande: 19.09.2012
(73) Titulaire: Airbus Operations (Société par actions simplifiée), 31060 Toulouse (FR)
(72) Inventeur: Costes, Régis, 31000 Toulouse (FR); De Verbigier, Laurence, 31170 Tournefeuille (FR); Begout, Frank, 31130 Balma (FR); Andrieu, Laurent, 31140 Aucamville (FR)
(74) Mandataire: Augarde, Eric

(56) Documents cités:
- EP-A1- 0 407 179
- EP-A2- 0 743 583
- EP-A2- 2 026 158
- FR-A1- 2 924 538
- US-A1- 2008 036 617
- US-A1- 2010 250 047

## Description

### DOMAINE DE L'INVENTION

La présente invention se rapporte au domaine de surveillance d'un actionneur de commande de vol d'un aéronef et en particulier un actionneur de commande de vol primaire.

Les aéronefs possèdent des systèmes de commande de vol dans lesquels les actions mécaniques sur des organes de pilotage (manche, palonnier, etc.) et/ou, des informations issues du pilote automatique, sont converties en des signaux analogiques qui sont transmis à des actionneurs manoeuvrant des équipements ou des gouvernes de commandes par exemple un aileron, une gouverne de profondeur, une gouverne de direction, ou un aérofrein pour contrôler des fonctions de vol de roulis, lacet, tangage et freinage aérodynamique de l'aéronef.

En service, les actionneurs de commande de vol sont soumis à des sollicitations (par exemple, mouvements, variations d'efforts, de température, etc.) qui viennent progressivement endommager les différentes parties de l'équipement.

Les actionneurs de commande de vol sont donc qualifiés par tests pour tenir la durée de vie de l'aéronef sans défaillance.

Plus particulièrement, les actionneurs de commande de vol sont qualifiés en durabilité sur plusieurs aspects. Un premier aspect concerne la fatigue structurelle liée à un effort extérieur alterné. Un deuxième aspect concerne l'endurance liée à un mouvement combiné à un effort extérieur, concernant en particulier les éléments mécaniques mobiles (joints, rotules, pompes, moteurs etc.). Un troisième aspect concerne l'endurance thermique, en particulier pour les composants électroniques.

Les tests (mouvement/effort) sont définis à partir de missions de vol types qui sont simulées et rationnalisées selon des techniques aéronautiques conventionnelles de façon à obtenir un endommagement représentatif, par le biais de programmes automatisés de simulation et de rationalisation tel que l'algorithme « Rainflow » pour la fatigue.

La qualification est ensuite prolongée jusqu'à la défaillance (c'est-à-dire, jusqu'à la rupture pour la fatigue et la défaillance fonctionnelle pour l'endurance), de manière à déterminer les marges existantes par rapport à la durée de vie spécifiée et le potentiel absolu de vie de l'actionneur.

Toutefois, la corrélation entre la vie qualifiée et la vie en service d'un actionneur donné est difficile à établir dans l'état actuel.

En effet, la méthode de qualification reste théorique et les missions de vol peuvent varier d'un aéronef à un autre.

De plus, des informations concernant l'utilisation des actionneurs peuvent être perdues sachant que les actionneurs peuvent être réparés et réinstallés sur un autre aéronef et que les données de certaines compagnies aériennes peuvent ne pas forcément être à jour.

Par ailleurs, une utilisation anormale d'un actionneur (par exemple une charge excessive) n'est pas rapportée, tant qu'aucune défaillance n'est détectée par le système de surveillance de l'aéronef ou lors d'une opération de maintenance.

Ainsi, dans un souci de sécurité, et en raison des aspects cités ci-dessus, l'utilisation de tous les actionneurs d'un aéronef est limitée à l'évaluation théorique et forfaitaire de l'aéronef le plus âgé de la flotte (fleet leader).

Cependant, ceci entraîne des limitations importantes sur la durée d'utilisation des actionneurs et donc une pénalité sur les aspects de disponibilités, coûts et maintenances.

Des systèmes de surveillance d'actionnaires sont décrits dans les documents d'art antérieur suivants : FR2924538, EP2026158, US2010/250047 et EP0743583.

L'objet de la présente invention est par conséquent la surveillance d'un actionneur de commande de vol d'un aéronef pour déterminer de manière automatisée son potentiel réel de vie restant, connaître son mode d'utilisation, et pronostiquer tout risque de défaillance sans présenter les inconvénients précités.

### OBJET ET RÉSUME DE L'INVENTION

La présente invention concerne un système de surveillance d'un actionneur de commande de vol d'un aéronef, comportant :
- un actionneur,
- des capteurs au niveau de l'actionneur pour recueillir à chaque vol de l'aéronef des séries de mesures sur des paramètres relatifs audit actionneur,
- des moyens de traitement pour calculer un ensemble d'indicateurs d'endommagements en utilisant de manière cumulative les séries de mesures observées lors de chacun des vols successifs de l'aéronef, et
- une mémoire non volatile pour stocker ledit ensemble d'indicateurs d'endommagements, ladite mémoire étant intégrée dans l'actionneur.

Ceci permet de profiter de l'existence des capteurs au niveau de l'actionneur pour déterminer de manière automatisé l'état d'endommagement de l'actionneur. L'indicateur d'endommagement est une information qui peut renseigner sur le potentiel de vie consommé de l'actionneur et sur le type de sollicitations rencontrées.

Cette configuration permet de fournir une traçabilité efficace de l'actionneur du fait que les données stockées sont indissociables de l'actionneur. Ceci supprime le problème de perte d'informations sur l'historique de l'actionneur. En effet, les données suivent l'actionneur indépendamment de l'aéronef et évitent ainsi l'application forfaitaire en fonction de l'aéronef le plus âgé de la flotte (fleet leader).

Selon une particularité de la présente invention, les moyens de traitement sont configurés pour calculer des indicateurs courants représentatifs des séries de mesures courantes observées lors de chaque vol courant de l'aéronef, et les moyens de traitement sont configurés pour calculer lesdits indicateurs d'endommagements en sommant un à un de manière correspondante chacun desdits indicateurs courants à chacun des indicateurs d'endommagements précédents prélevés sur lesdits moyens de stockage.

Ceci permet de déterminer de manière simple des indicateurs d'endommagements précis tout en optimisant le temps de calcul et l'espace de mémoire nécessaire.

Avantageusement, lesdits moyens de traitement sont configurés pour analyser ledit ensemble d'indicateurs d'endommagements afin de diagnostiquer l'état d'endommagement de différents éléments dudit actionneur.

Ceci permet de déterminer le potentiel de vie restant de l'actionneur et le type de sollicitations rencontrées. De plus, le retour d'information concernant les sollicitations réelles sur l'actionneur en service permet de comparer ces dernières avec les sollicitations théoriques utilisées pour la qualification permettant d'ajuster les missions théoriques et d'optimiser le dimensionnement de l'actionneur. Les informations disponibles peuvent en plus aider les investigations et opérations de maintenance.

Avantageusement, ledit ensemble d'indicateurs d'endommagements comporte au moins un indicateur de potentiel de vie consommé dudit actionneur, et les moyens de traitement sont configurés pour comparer ledit indicateur de potentiel de vie consommé au potentiel absolu de vie afin de déterminer le potentiel de vie restant dudit actionneur.

Ainsi, on dispose d'une information sur le potentiel de vie restant qui permet d'étendre la durée de vie de l'actionneur. En outre, on peut ajuster de manière précise les intervalles de maintenance en fonction des indicateurs de durée de vie restante permettant de diminuer les actions de maintenance forfaitaires.

Avantageusement, ledit ensemble d'indicateurs d'endommagements comporte au moins un indicateur de défaillance indiquant un risque de défaillance dudit actionneur, et les moyens de traitement sont configurés pour comparer ledit indicateur de défaillance à une valeur de seuil prédéfinie afin de détecter un risque de défaillance.

Ceci permet de détecter et de pronostiquer l'état de défaillance de manière précise permettant le remplacement de l'équipement surveillé au plus tôt en fonction de la criticité de la défaillance.

Avantageusement, ledit ensemble d'indicateurs d'endommagements comporte au moins un indicateur parmi les indicateurs suivants : nombre de cycles de vol, nombre d'heures de vol, course totale, nombre de dépassements d'une charge limite, nombre d'activations, cycles de fatigue et cycles d'endurance.

Ceci permet de sélectionner les indicateurs d'endommagements à surveiller selon la puissance de calcul des moyens de traitement.

Selon un aspect de la présente invention, ledit actionneur comporte un module de contrôle en liaison avec lesdits capteurs, ledit module de contrôle étant configuré pour envoyer lesdites séries de mesures via un système de communication de l'aéronef aux moyens de traitement installés à bord de l'aéronef, et lesdits moyens de traitement sont configurés pour calculer en temps réel les indicateurs d'endommagements avant de les renvoyer au module de contrôle qui est configuré pour les stocker dans ladite mémoire.

Ceci permet de réaliser le calcul en temps réel pendant le vol afin de stocker uniquement le résultat des calculs dans la mémoire intégrée sur l'actionneur permettant ainsi de minimiser à la fois, l'espace mémoire nécessaire pour la mémoire intégrée à l'actionneur, et celle utilisée pour le calcul en temps réel par l'unité de calcul.

Selon une variante de la présente invention, les séries de mesures observées à chaque vol de l'aéronef sont enregistrées dans des moyens de stockage à bord de l'aéronef, et les moyens de traitement sont configurés pour calculer l'ensemble d'indicateurs d'endommagements lorsque l'aéronef n'est pas en vol.

Le fait de réaliser les calculs en fin de vol lorsque l'aéronef est au sol permet de minimiser la puissance de calcul nécessaire en vol.

L'invention vise aussi un actionneur de commande de vol d'un aéronef configuré pour être en liaison avec un calculateur à bord de l'aéronef, ledit actionneur comportant :
- des capteurs pour recueillir à chaque vol de l'aéronef des séries de mesures sur des paramètres relatifs audit actionneur, et
- une mémoire non volatile physiquement intégrée à l'actionneur pour stocker un ensemble d'indicateurs d'endommagements calculés par ledit calculateur en utilisant de manière cumulative les séries de mesures observées lors de chacun des vols successifs de l'aéronef.

L'invention vise aussi un aéronef comportant le système de surveillance et/ou l'actionneur selon les caractéristiques ci-dessus.

L'invention vise également un procédé de surveillance d'un actionneur de commande de vol d'un aéronef, comportant les étapes suivantes :
- recueillir à chaque vol de l'aéronef des séries de mesures sur des paramètres relatifs audit actionneur,
- calculer un ensemble d'indicateurs d'endommagements en utilisant de manière cumulative les séries de mesures observées lors de chacun des vols successifs de l'aéronef, et
- enregistrer ledit ensemble d'indicateurs d'endommagements sur une mémoire non volatile physiquement intégrée à l'actionneur.

### BRÈVE DESCRIPTION DES DESSINS

D'autres particularités et avantages du dispositif et du procédé selon l'invention ressortiront mieux à la lecture de la description faite ci-après, à titre indicatif mais non limitatif, en référence aux dessins annexés sur lesquels :
- la Fig. 1 illustre de manière schématique un système de surveillance d'un actionneur de commande de vol d'un aéronef selon l'invention ;
- la Fig. 2 illustre de manière schématique un exemple du système de surveillance de la Fig. 1 monté dans un aéronef ; et
- la Fig. 3 est un algorithme illustrant un exemple de surveillance de l'actionneur sur une vie de l'aéronef selon l'invention.

### DESCRIPTION DÉTAILLÉE DE MODES DE RÉALISATION

Le principe de l'invention consiste à exploiter au mieux la présence des capteurs embarqués pour évaluer de manière automatisée l'endommagement des actionneurs dans un aéronef et en particulier les actionneurs de commande de vol.

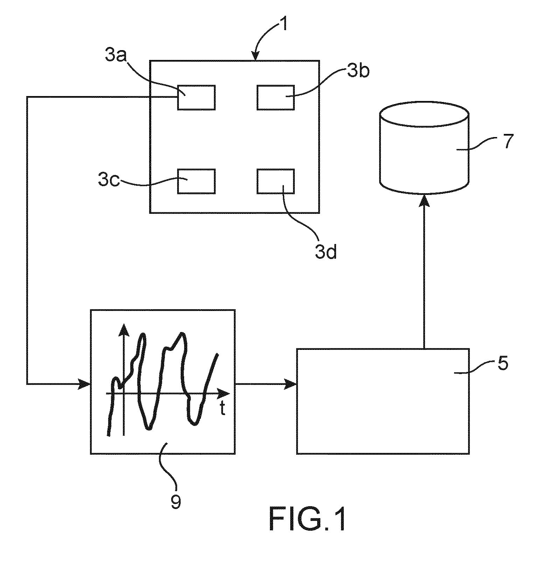

La Fig. 1 illustre de manière schématique un système ou procédé de surveillance d'un actionneur de commande de vol d'un aéronef selon l'invention.

Ce système comporte un actionneur 1 de commande de vol, des capteurs 3, des moyens de traitement 5, et des moyens de stockage 7 de données (ou mémoire de stockage).

Les moyens de traitement 5 comprennent un programme d'ordinateur comportant des instructions de code adaptées à la mise en oeuvre du procédé de surveillance selon l'invention.

L'actionneur 1 de commande de vol peut être un actionneur de type hydraulique, électro-hydraulique, électro-hydraulique assisté électriquement, électro-hydrostatique, ou électromécanique.

L'actionneur 1 de commande de vol est en général équipé d'une pluralité de capteurs 3a-3d tels que des capteurs de pression, de position, de températures, ainsi que d'autres types de capteurs ou jauges. Les mesures fournies par ces capteurs 3a-3d sont utilisées par des calculateurs de commande de vol pour contrôler l'actionneur 1.

Les capteurs 3a-3d installés au niveau de l'actionneur 1 sont configurés pour recueillir des séries de mesures sur des paramètres relatifs à l'actionneur en service.

Par exemple, le capteur 3a de pression ou jauge de contraintes fournit un spectre 9 d'effort subi par l'actionneur 1 en fonction du temps et peut ainsi renseigner sur la fatigue. Le capteur 3a de pression peut également être utilisé pour détecter un dépassement de la charge limite de l'actionneur 1. Ainsi, toute utilisation anormale qui dépasse le dimensionnement de l'actionneur 1 peut être détectée grâce aux mesures recueillies par le capteur 3a de pression.

Le capteur 3b de position fournit un spectre de mouvements des éléments mobiles de l'actionneur et renseigne donc sur la course totale (somme des mouvements) qui est un des paramètres permettant l'évaluation de l'endommagement en endurance.

Le capteur thermique 3c détecte en particulier les surchauffes de la partie électronique de l'actionneur et fournit donc un spectre de température en fonction du temps.

Par ailleurs, plusieurs capteurs peuvent être utilisés dans un calcul pour déterminer un indicateur. Par exemple, la combinaison des informations du capteur de pression 3a et du capteur de position 3b permet le calcul de l'endurance subie par les rotules de l'actionneur.

Ainsi, les différents paramètres observés par les capteurs 3a-3d comportent, par exemple, la pression ou contraintes subies par l'actionneur, la température des éléments électroniques de l'actionneur, la position ou la course des éléments mobiles de l'actionneur, la charge subie par l'actionneur, etc.

Conformément à l'invention, ces séries de mesures observées lors de chacun des vols successifs de l'aéronef sont utilisées de manière cumulative par les moyens de traitement 5 pour calculer un ensemble d'indicateurs d'endommagements qui est ensuite stocké dans les moyens de stockage de données (ou la mémoire de stockage). On notera qu'un indicateur d'endommagement est un indicateur du potentiel de vie consommé de l'actionneur et/ou un indicateur de défaillance de l'actionneur.

Plus particulièrement, à chaque vol courant de l'aéronef, les moyens de traitement 5 sont configurés pour calculer des indicateurs courants représentatifs des séries de mesures courantes observées ou détectées par les différents capteurs 3a-3d. Ensuite, les moyens de traitement 5 calculent les indicateurs d'endommagements en sommant un à un de manière correspondante chacun des indicateurs courants à chacun des indicateurs d'endommagements précédents prélevés sur la mémoire 7.

Autrement dit, la série de mesures courante d'un paramètre donné observée lors d'un vol courant de l'aéronef est utilisée pour calculer un indicateur courant représentatif de l'évolution de ce paramètre. Ensuite, un indicateur d'endommagement associé à ce même paramètre est calculé de manière cumulative en ajoutant l'indicateur courant à un indicateur d'endommagement précédent qui a été calculé et enregistré lors du vol précédent le vol courant de l'aéronef.

En outre, les moyens de traitement 5 sont configurés pour analyser l'ensemble d'indicateurs d'endommagements afin de diagnostiquer l'état d'endommagement de l'actionneur 1 ou des différents éléments de l'actionneur 1. L'analyse comporte une comparaison entre chaque indicateur d'endommagement et une valeur de référence ou un seuil prédéterminé définis par la valeur de l'indicateur lors de la défaillance observé en qualification. Cette comparaison permet d'évaluer le potentiel de vie restant de l'actionneur 1. Par ailleurs, la comparaison permet de déterminer le type de sollicitations rencontrées par l'actionneur 1 et par conséquent de pronostiquer un risque de défaillance. De plus, la connaissance des sollicitations réelles sur l'actionneur 1 permet d'affiner les diagnostics en cas de panne et d'ajuster les missions théoriques et le dimensionnement de l'actionneur.

Avantageusement, la mémoire 7 (de type mémoire non volatile) est physiquement intégrée dans l'actionneur. Ainsi, les données sur les indicateurs d'endommagement stockées dans la mémoire 7 sont indissociables de l'actionneur 1 et suivent ce dernier indépendamment du fait qu'il puisse être démonté d'un aéronef pour être installé dans un autre aéronef.

L'installation de manière permanente de la mémoire non volatile sur l'actionneur permet d'associer les indicateurs d'endommagements cumulés en permanence à l'actionneur. Il est possible d'interroger la mémoire 7 soit sur l'aéronef, soit en atelier de réparation, afin de connaître le potentiel de vie restant et le mode d'utilisation de l'actionneur 1. Ces données peuvent aussi s'avérer précieuses dans le cadre d'une investigation de panne (trouble shooting, en anglais).

On peut aussi utiliser, en complément du stockage direct sur l'actionneur, un mode de stockage au sol par le biais des plateformes de maintenance et de la communication aéronef/sol. Ceci permet de gérer le potentiel de vie de l'actionneur 1 en temps réel.

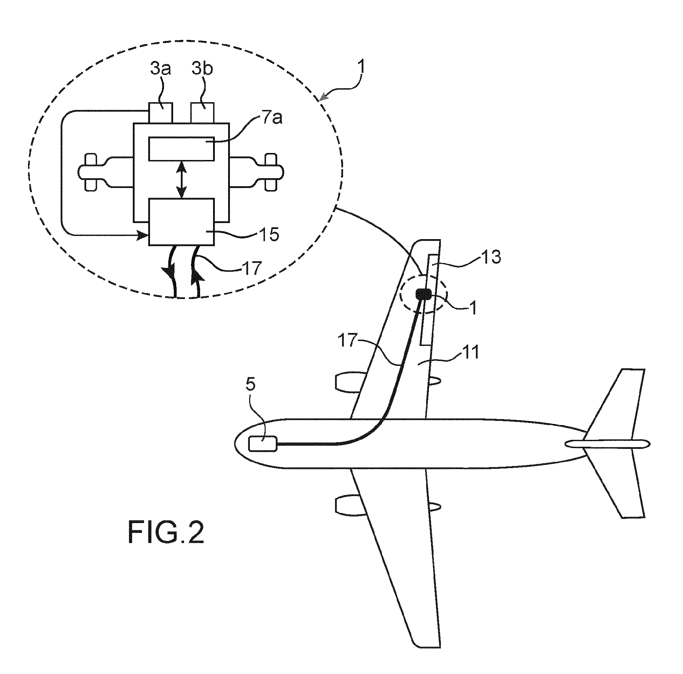

La Fig. 2 illustre de manière schématique un exemple du système de surveillance d'un actionneur dans un aéronef selon l'invention.

Selon cet exemple, l'actionneur 1 de commande de vol est un actionneur de commande de vol primaire installé sur une aile 11 pour manoeuvrer un aileron 13.

L'actionneur 1 est équipé de plusieurs capteurs 3a, 3b, d'un module électronique de commande ou de contrôle 15, et d'une mémoire 7a non volatile.

Le module de contrôle 15 est connecté via un système de communication numérique 17 de l'aéronef (par exemple, un bus de données) aux moyens de traitement 5 (par exemple un calculateur de commande) installés à bord de l'aéronef. Le module de contrôle 15 est également connecté aux capteurs 3a, 3b et à la mémoire 7a de l'actionneur. On notera que le module de contrôle 15 est démontable sur aéronef et il est par conséquent avantageux de le dissocier de la mémoire 7a afin que cette dernière ne soit pas amovible et reste physiquement liée à l'actionneur 1.

Selon cet exemple, le module de contrôle 15 envoie en continu les mesures ou signaux en provenance des capteurs 3a, 3b aux moyens de traitement 5 via le système de communication 17.

Les moyens de traitement 5 exécutent des algorithmes de traitement de signaux pour analyser en temps réel les signaux en provenance du module de contrôle 15 afin de calculer les valeurs des indicateurs d'endommagements. Avantageusement, les algorithmes utilisés pour calculer les indicateurs d'endommagements sont les mêmes que ceux utilisés habituellement lors de la qualification des actionneurs.

Ainsi, en fin de vol, les moyens de traitement 5 envoient le résultat (c'est-à-dire, les valeurs cumulées) des indicateurs d'endommagements au module de contrôle 15. Ce dernier stocke ensuite les valeurs cumulées des indicateurs d'endommagements dans la mémoire 7a intégrée à l'actionneur 1. Le fait de stocker uniquement les résultats des calculs permet de minimiser les dimensions de la mémoire 7a de l'actionneur 1.

En variante, les séries de mesures observées à chaque vol de l'aéronef peuvent être enregistrées en continu dans des moyens de stockage (non représentés) à bord de l'aéronef sans solliciter la puissance de calcul des moyens de traitement 5 en vol. Les moyens de traitement 5 commencent à calculer l'ensemble d'indicateurs d'endommagements uniquement lorsque l'aéronef n'est plus en vol. Ensuite, l'ensemble d'indicateurs d'endommagements est enregistré dans les moyens de stockage. On notera que dans le mode de réalisation où l'actionneur 1 est équipé d'une mémoire 7a physiquement attaché à l'actionneur 1, les séries de mesures ne sont pas enregistrées sur cette mémoire 7a mais dans différents moyens de stockage à bord de l'aéronef. C'est seulement les valeurs cumulées des indicateurs d'endommagement qui sont enregistrées sur la mémoire 7a de l'actionneur 1.

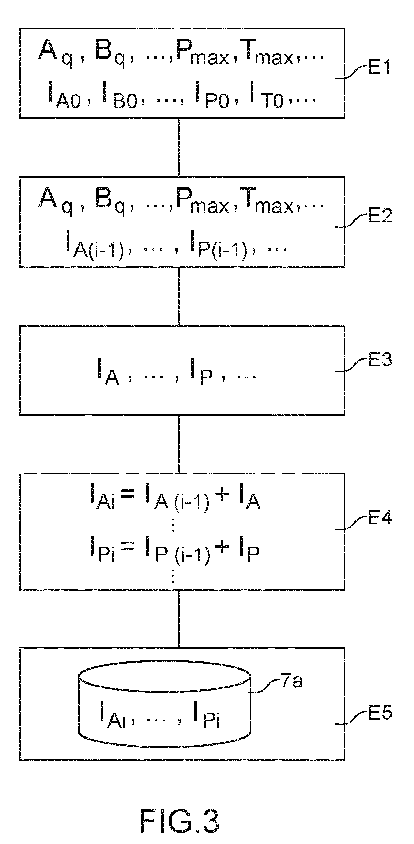

La Fig. 3 est un algorithme illustrant un exemple de surveillance de l'actionneur 1 sur une vie de l'aéronef selon l'invention. Selon cet exemple l'actionneur 1 est équipé d'une mémoire 7a comme illustré sur la Fig. 2 et le traitement de données est réalisé en temps réel.

Au préalable, lors d'une phase de qualification, l'actionneur est qualifié pour une vie de l'aéronef tel que défini par des missions théoriques de vol en utilisant des méthodes de rationalisation conventionnelles (par exemple, méthode de Rainflow). Cette phase préalable de qualification sera effectuée en utilisant le même système de comptage et de calcul que celui utilisé en service. De cette façon, le potentiel de vie déduit de la qualification est directement comparable avec l'indicateur calculé sur l'aéronef. Le potentiel de vie est défini en fonction de l'indicateur d'endommagement au moment de la défaillance (par exemple, une rupture en fatigue).

Supposons que le cumul testé de la qualification comporte par exemple les valeurs de références et seuils suivants :
- A_{q} est une première valeur de référence représentative de la sévérité en fatigue,
- B_{q} est une deuxième valeur de référence représentative de l'endommagement des rotules de l'actionneur,
- C_{q} est une troisième valeur de référence représentative d'un nombre d'activations,
- D_{q} est une quatrième valeur de référence représentative d'une course totale,...etc,
- Pₘₐₓ est un seuil correspondant à une limite de pression maximale pour l'actionneur,
- Tₘₐₓ est un seuil correspondant à une température maximale, etc.

On peut alors construire des indicateurs d'endommagements I_{A}, I_{B}, I_{C}, I_{D}, ..., I_{P}, I_{T}, etc. comportant au moins un indicateur de potentiel de vie consommé (par exemple, l'indicateur I_{A} de fatigue) et/ou au moins un indicateur de défaillance (par exemple, l'indicateur I_{P} de dépassement du seuil de pression Pₘₐₓ).

L'étape E1 correspond à l'initialisation de la mémoire équipant un actionneur neuf.

Ainsi, les valeurs de références et seuils ci-dessus sont enregistrées dans la mémoire et les indicateurs d'endommagements sont initialisés (I_{A0}=0, I_{B0}=0, I_{C0}=0, I_{D0}=0, ..., I_{P0}=0, I_{T0}=0, etc.).

Les étapes E2-E5 correspondent à un comptage cumulé réalisé en continu durant plusieurs vols.

Par exemple, au premier vol, le comptage cumulé est I_{A1}= I_{A0}+ I_{A}, I_{B1}= I_{B0}+ I_{B}, ..., I_{P1}= I_{P0}+ I_{P}, I_{T1}= I_{T0}+ I_{T}, etc. où I_{A}, I_{B},..., I_{P}, I_{T} correspondant aux indicateurs d'endommagement courants observés durant le vol courant en question.

Au deuxième vol, le comptage cumulé est I_{A2}= I_{A1}+ I_{A}, I_{B2}= I_{B1}+ I_{B},..., I_{P2}= I_{P1}+ I_{P}, I_{T2}= I_{T1}+ I_{T}. Au i^{ème} vol, le comptage cumulé est I_{Ai}= I_{A(i-1)}+ I_{A}, I_{Bi}= I_{B(i-1})+ I_{B},..., I_{Pi}= I_{P(i-1)}+ I_{P}, I_{Ti}= I_{T(i-1)}+ I_{T}, et ainsi de suite.

Plus particulièrement, les étapes E2-E4 correspondent au comptage cumulé réalisé en continu durant la durée du i^{ème} vol.

A l'étape E2 après le démarrage de l'aéronef (vol numéro i), les moyens de traitement 5 lisent les valeurs enregistrées dans la mémoire 7a :
I_{A(i-1)}, I_{B(i-1)}, ..., I_{P(i-1)}, I_{T(i-1)}, etc.

A l'étape E3 le module de contrôle 15 de l'actionneur 1 envoie en continu les signaux issus des capteurs 2a, 2b aux moyens de traitement 5. Ces derniers analysent en parallèle, en continu et en temps réel, les signaux en provenance des capteurs 2a, 2b. On notera que les moyens de traitement 5 utilisent des programmes de traitement basés sur les mêmes algorithmes utilisés pour la rationalisation des missions théoriques servant au dimensionnement de l'actionneur. Le traitement de données peut comporter des analyses de type rationalisation (fatigue, endurance) ou comptage (nombre de dépassements, course totale, nombre de vols, etc.).

Par exemple, pour des signaux de pression émis par le capteur de pression 3a, les moyens de traitement 5 exécutent un algorithme de rationalisation de type Rainflow pour analyser ces signaux et pour compter des cycles d'efforts ou de fatigues afin de déterminer un indicateur de fatigue courant I_{A}. Cet indicateur I_{A} est représentatif d'un endommagement lié à la fatigue et définit donc une indication sur le potentiel de vie consommé.

De même, les moyens de traitement 5 utilisent les signaux de pression pour compter le nombre de dépassements courants I_{P} du seuil de pression maximale Pₘₐₓ. L'indicateur de dépassement I_{P} est un indicateur de défaillance. En effet, un nombre important de dépassements de l'effort maximum pouvant être supporté par l'actionneur est révélateur d'une anomalie et d'un risque de défaillance. Par ailleurs, on notera que toute variation brusque d'un paramètre peut également être révélatrice d'un potentiel de défaillance.

A l'étape E4 en fin de vol, les moyens de traitement définissent des valeurs finales des indicateurs d'endommagement courants I_{A}, I_{B},..., I_{P}, I_{T} et les ajoutent un à un aux indicateurs d'endommagement cumulés au vol précédent I_{A(i-1)}, I_{B(i-1)}, I_{P(i-1)}, I_{T(i-1)} pour définir un nouvel ensemble d'indicateurs d'endommagement :
I_{Ai}= I_{A(i-1)}+ I_{A}, I_{Bi}= I_{B(i-1)}+ I_{B},..., I_{Pi}= I_{P(i-1)} + I_{P}, I_{Ti}= I_{T(i-1)}+ I_{T}, etc.

A l'étape E5, le nouvel ensemble d'indicateurs d'endommagement I_{Ai}, I_{Bi},..., I_{Pi}, I_{Ti} est envoyé au module de contrôle 15 pour le stocker sur la mémoire 7a de l'actionneur 1.

Les moyens de traitement 5 peuvent aussi analyser après chaque vol ou un nombre déterminé de vols, les indicateurs d'endommagement pour les comparer aux valeurs de référence A_{q}, B_{q}, C_{q}, etc., ou valeurs seuils Pₘₐₓ, Tₘₐₓ, etc., prédéterminées lors de la phase de qualification de l'actionneur.

Par exemple, au N^{ième} vol, les moyens de traitement 5 comparent l'indicateur de fatigue cumulé I_{AN} (indiquant un potentiel de vie consommé) à la valeur de référence prédéterminée A_{q} afin de déterminer un potentiel de vie restant de l'actionneur 1. On notera que l'actionneur 1 ou l'élément concerné de l'actionneur aura atteint son potentiel de vie lorsque l'indicateur associé atteindra la valeur de référence de qualification.

De même, les moyens de traitement 5 peuvent comparer l'indicateur de défaillance cumulé I_{PN} à la valeur de seuil prédéfinie Pₘₐₓ afin de détecter un risque de défaillance de l'actionneur.

On notera que le traitement de données (rationalisation ou comptage cumulatif) en temps réel des mesures ou spectres fournis par les capteurs 3a-3d nécessite une puissance de calcul et une mémoire de stockage temporaire dédiées. La puissance de calcul nécessaire pour la rationalisation est non négligeable.

Néanmoins, tous les indicateurs d'endommagement étant indépendants les uns des autres, on peut limiter le nombre d'indicateurs en fonction de la puissance de calcul disponible.

Ainsi, selon un premier mode de réalisation, dans le cas où la puissance de calcul disponible est faible, le comptage peut se limiter par exemple au nombre de cycles de vol, au nombre d'heures de vol, à la course totale (somme des mouvements), au nombre de dépassements de la charge limite, et au nombre d'activations dans les différents modes possibles. Ceci permet d'estimer le potentiel de vie consommé et restant de l'actionneur.

Selon un deuxième mode de réalisation, dans le cas où la puissance de calcul disponible est moins limitée, on peut utiliser un traitement de rationalisation en plus des comptages utilisés ci-dessus dans le premier mode. Ainsi, les spectres fournis par les capteurs 3a-3d peuvent être utilisées pour réaliser une rationalisation automatisée en temps réel sur un calculateur embarqué, suivant les mêmes algorithmes de rationalisation qui ont été utilisés lors de la phase de qualification pour définir les tests de qualification en fatigue et en endurance.

## Revendications

1. Système de surveillance d'un actionneur de commande de vol d'un aéronef, comportant :
- un actionneur (1),
- des capteurs (3a-3d) au niveau de l'actionneur (1) pour recueillir à chaque vol de l'aéronef des séries de mesures sur des paramètres relatifs audit actionneur,
- des moyens de traitement (5) pour calculer un ensemble d'indicateurs d'endommagements en utilisant de manière cumulative les séries de mesures observées lors de chacun des vols successifs de l'aéronef, et
- une mémoire (7 ; 7a) pour stocker ledit ensemble d'indicateurs d'endommagements,
ledit système de surveillance étant **caractérisé en ce que** ladite mémoire (7a) est non volatile et est intégrée dans l'actionneur.

2. Système selon la revendication 1, **caractérisé en ce que** :
- les moyens de traitement (5) sont configurés pour calculer des indicateurs courants représentatifs des séries de mesures courantes observées lors de chaque vol courant de l'aéronef, et
- les moyens de traitement (5) sont configurés pour calculer lesdits indicateurs d'endommagements en sommant un à un de manière correspondante chacun desdits indicateurs courants à chacun des indicateurs d'endommagements précédents prélevés sur lesdits moyens de stockage.

3. Système selon l'une quelconque des revendications précédentes, **caractérisé en ce que** lesdits moyens de traitement (5) sont configurés pour analyser ledit ensemble d'indicateurs d'endommagements afin de diagnostiquer l'état d'endommagement des différents éléments dudit actionneur (1).

4. Système selon l'une quelconque des revendications précédentes, **caractérisé en ce que** ledit ensemble d'indicateurs d'endommagements comporte au moins un indicateur de potentiel de vie consommé dudit actionneur, et **en ce que** les moyens de traitement (5) sont configurés pour comparer ledit indicateur de potentiel de vie consommé à une valeur de référence prédéterminée afin de déterminer le potentiel de vie restant dudit actionneur (1).

5. Système selon l'une quelconque des revendications précédentes, **caractérisé en ce que** ledit ensemble d'indicateurs d'endommagements comporte au moins un indicateur de défaillance indiquant un risque de défaillance dudit actionneur, et **en ce que** les moyens de traitement (5) sont configurés pour comparer ledit indicateur de défaillance à une valeur de seuil prédéfinie afin de détecter un risque de défaillance.

6. Système selon l'une quelconque des revendications précédentes, **caractérisé en ce que** ledit ensemble d'indicateurs d'endommagements comporte au moins un indicateur parmi les indicateurs suivants : nombre de cycles de vol, nombre d'heures de vol, course totale, nombre de dépassements d'une charge limite, nombre d'activations, cycles de fatigue et cycles d'endurance.

7. Système selon l'une quelconque des revendications précédentes, **caractérisé en ce que** ledit actionneur (1) comporte un module de contrôle (15) en liaison avec lesdits capteurs (3a, 3b), ledit module de contrôle étant configuré pour envoyer lesdites séries de mesures via un système de communication (17) de l'aéronef aux moyens de traitement (5) installés à bord de l'aéronef, et **en ce que** lesdits moyens de traitement sont configurés pour calculer en temps réel les indicateurs d'endommagements avant de les renvoyer au module de contrôle (15) qui est configuré pour les stocker dans ladite mémoire (7a).

8. Système selon l'une quelconque des revendications 1 à 6, **caractérisé en ce que** les séries de mesures observées à chaque vol de l'aéronef sont enregistrées dans des moyens de stockage à bord de l'aéronef, et **en ce que** les moyens de traitement (5) sont configurés pour calculer l'ensemble d'indicateurs d'endommagements lorsque l'aéronef n'est pas en vol.

9. Actionneur de commande de vol d'un aéronef configuré pour être en liaison avec un calculateur (5) à bord de l'aéronef, **caractérisé en ce qu'**il comporte :
- des capteurs (3a, 3b) pour recueillir à chaque vol de l'aéronef des séries de mesures sur des paramètres relatifs audit actionneur, et
- une mémoire (7a) non volatile physiquement intégrée à l'actionneur pour stocker un ensemble d'indicateurs d'endommagements calculés par ledit calculateur en utilisant de manière cumulative les séries de mesures observées lors de chacun des vols successifs de l'aéronef.

10. Aéronef comportant le système de surveillance selon l'une quelconque des revendications 1 à 8 et/ou l'actionneur selon la revendication 9.

11. Procédé de surveillance d'un actionneur de commande de vol d'un aéronef, **caractérisé en ce qu'**il comporte les étapes suivantes :
- recueillir à chaque vol de l'aéronef des séries de mesures sur des paramètres relatifs audit actionneur,
- calculer un ensemble d'indicateurs d'endommagements en utilisant de manière cumulative les séries de mesures observées lors de chacun des vols successifs de l'aéronef, et
- enregistrer ledit ensemble d'indicateurs d'endommagements sur une mémoire non volatile physiquement intégrée à l'actionneur.

## Patentansprüche

1. Überwachungssystem eines Flugsteuerungs-Stellglieds eines Luftfahrzeugs, das aufweist:
- ein Stellglied (1),
- Sensoren (3a-3d) im Bereich des Stellglieds (1), um bei jedem Flug des Luftfahrzeugs Messreihen über Parameter bezüglich des Stellglieds zu sammeln,
- Verarbeitungseinrichtungen (5), um eine Einheit von Beschädigungsanzeigen zu berechnen, indem die bei jedem der aufeinanderfolgenden Flüge des Luftfahrzeugs beobachteten Messreihen kumulativ verwendet werden, und
- einen Speicher (7; 7a), um die Einheit von Beschädigungsanzeigen zu speichern,
wobei das Überwachungssystem **dadurch gekennzeichnet ist, dass** der Speicher (7a) nicht-flüchtig und in das Stellglied integriert ist.

2. System nach Anspruch 1, **dadurch gekennzeichnet, dass**:
- die Verarbeitungseinrichtungen (5) konfiguriert sind, laufende Anzeigen zu berechnen, die für die bei jedem laufenden Flug des Luftfahrzeugs beobachteten laufenden Messreihen repräsentativ sind, und
- die Verarbeitungseinrichtungen (5) konfiguriert sind, die Beschädigungsanzeigen zu berechnen, indem jede der laufenden Anzeigen mit jeder der vorhergehenden Beschädigungsanzeigen einzeln entsprechend summiert wird, die aus den Speichermitteln entnommen werden.

3. System nach einem der vorhergehenden Ansprüche, **dadurch gekennzeichnet, dass** die Verarbeitungseinrichtungen (5) konfiguriert sind, die Einheit von Beschädigungsanzeigen zu analysieren, um den Beschädigungszustand der verschiedenen Elemente des Stellglieds (1) zu diagnostizieren.

4. System nach einem der vorhergehenden Ansprüche, **dadurch gekennzeichnet, dass** die Anzahl von Beschädigungsanzeigen mindestens einen Anzeige des verbrauchten Lebenspotentials des Stellglieds aufweist, und dass die Verarbeitungseinrichtungen (5) konfiguriert sind, die Anzeige des verbrauchten Lebensdauerpotentials mit einem vorbestimmten Bezugswert zu vergleichen, um das verbleibende Lebensdauerpotential des Stellglieds (1) zu bestimmen.

5. System nach einem der vorhergehenden Ansprüche, **dadurch gekennzeichnet, dass** die Einheit von Beschädigungsanzeigen mindestens eine Ausfallanzeige aufweist, die eine Gefahr eines Ausfalls des Stellglieds anzeigt, und dass die Verarbeitungseinrichtungen (5) konfiguriert sind, die Ausfallanzeige mit einem vordefinierten Schwellwert zu vergleichen, um eine Ausfallgefahr zu erfassen.

6. System nach einem der vorhergehenden Ansprüche, **dadurch gekennzeichnet, dass** die Einheit von Beschädigungsanzeigen mindestens eine der folgenden Anzeigen aufweist: Anzahl von Flugzyklen, Anzahl von Flugstunden, Gesamtweg, Anzahl von Überschreitungen einer Grenzlast, Anzahl von Aktivierungen, Ermüdungszyklen und Lebensdauerzyklen.

7. System nach einem der vorhergehenden Ansprüche, **dadurch gekennzeichnet, dass** das Stellglied (1) ein Kontrollmodul (15) in Verbindung mit den Sensoren (3a, 3b) aufweist, wobei das Kontrollmodul konfiguriert ist, die Messreihen über ein Kommunikationssystem (17) des Luftfahrzeugs an die an Bord des Luftfahrzeugs installierten Verarbeitungseinrichtungen (5) zu senden, und dass die Verarbeitungseinrichtungen konfiguriert sind, in Echtzeit die Beschädigungsanzeigen zu berechnen, ehe sie sie an das Kontrollmodul (15) zurückschicken, das konfiguriert ist, sie im Speicher (7a) zu speichern.

8. System nach einem der Ansprüche 1 bis 6, **dadurch gekennzeichnet, dass** die bei jedem Flug des Luftfahrzeugs beobachteten Messreihen in Speichereinrichtungen an Bord des Luftfahrzeugs gespeichert werden, und dass die Verarbeitungseinrichtungen (5) konfiguriert sind, um die Einheit von Beschädigungsanzeigen zu berechnen, wenn das Luftfahrzeug nicht fliegt.

9. Flugsteuerungs-Stellglied eines Luftfahrzeugs, das konfiguriert ist, mit einem Rechner (5) an Bord des Luftfahrzeugs in Verbindung zu stehen, **dadurch gekennzeichnet, dass** es aufweist:
- Sensoren (3a, 3b), um bei jedem Flug des Luftfahrzeugs Messreihen über Parameter bezüglich des Stellglieds zu sammeln, und
- einen physikalisch in das Stellglied integrierten, nicht-flüchtigen Speicher (7a), um eine Einheit von Beschädigungsanzeigen zu speichern, die von dem Rechner unter kumulativer Verwendung der bei jedem der aufeinanderfolgenden Flüge des Luftfahrzeugs beobachteten Messreihen berechnet werden.

10. Luftfahrzeug, das das Überwachungssystem nach einem der Ansprüche 1 bis 8 und/oder ein Stellglied nach Anspruch 9 aufweist.

11. Verfahren zur Überwachung eines Flugsteuerungs-Stellglieds eines Luftfahrzeugs, **dadurch gekennzeichnet, dass** es die folgenden Schritte aufweist:
- Sammeln von Messreihen über Parameter bezüglich des Stellglieds bei jedem Flug des Luftfahrzeugs,
- Berechnen einer Einheit von Beschädigungsanzeigen unter kumulativer Verwendung der bei jedem der aufeinanderfolgenden Flüge des Luftfahrzeugs beobachteten Messreihen, und
- Speichern der Einheit von Beschädigungsanzeigen in einem physikalisch in das Stellglied integrierten nicht-flüchtigen Speicher.

## Claims

1. A system for monitoring a flight control actuator of an aircraft, including:
- an actuator (1),
- sensors (3a-3d) in the actuator (1) to collect, during each flight of the aircraft, series of measurements of parameters relative to the said actuator,
- processing means (5) to calculate a set of damage indicators using, cumulatively, the series of measurements observed during each of the aircraft's successive flights, and
- a memory (7; 7a) to store the said set of damage indicators,
where the monitoring system is **characterised in that** the said memory (7a) is non-volatile and is integrated in the actuator.

2. A system according to claim 1, **characterised in that**:
- the processing means (5) are configured to calculate current indicators representing series of current measurements observed in each current flight of the aircraft, and
- the processing means (5) are configured to calculate the said damage indicators by totalling one-by-one in a corresponding fashion each of the said current indicators with each of the previous damage indicators taken from the said storage means.

3. A system according to any of the previous claims, **characterised in that** the said processing means (5) are configured to analyse the said set of damage indicators in order to diagnose the state of damage of the various elements of the said actuator (1).

4. A system according to any of the previous claims, **characterised in that** the said set of damage indicators includes at least one indicator of expired estimated service life of the said actuator, and **in that** the processing means (5) are configured to compare the said expired estimated service life with a predetermined reference value in order to determine the remaining estimated service life of the said actuator (1).

5. A system according to any of the previous claims, **characterised in that** the said set of damage indicators includes at least one failure indicator indicating a risk of failure of the said actuator, and **in that** the processing means (5) are configured to compare the said failure indicator with a predefined threshold value in order to detect a risk of failure.

6. A system according to any of the previous claims, **characterised in that** the said set of damage indicators includes at least one indicator from among the following: number of flight cycles, number of flight hours, total displacement, number of times a limit load has been exceeded, number of activations, fatigue cycles and endurance cycles.

7. A system according to any of the previous claims, **characterised in that** the said actuator (1) includes a control module (15) connected to the said sensors (3a, 3b), where the said control module is configured to send the said series of measurements via a communication system (17) of the aircraft to the processing means (5) installed on board the aircraft, and **in that** the said processing means are configured to calculate the damage indicators in real time, before sending them to the control module (15) which is configured to store them in the said memory (7a).

8. A system according to any of the claims 1 to 6, **characterised in that** the series of measurements observed during each flight of the aircraft are recorded in storage means on board the aircraft, and **in that** the processing means (5) are configured to calculate the set of damage indicators when the aircraft is not in flight.

9. A flight control actuator of an aircraft configured to be in connection with a computer (5) on board the aircraft, **characterised in that** it includes:
- sensors (3a, 3b) to collect, during each flight of the aircraft, series of measurements of parameters relative to the said actuator, and
- a non-volatile memory (7a) physically integrated in the actuator to store a set of damage indicators calculated by the said computer by using cumulatively the series of measurements observed during each of the aircraft's successive flights.

10. An aircraft including the monitoring system according to any of the claims 1 to 8 and/or the actuator according to claim 9.

11. A method for monitoring a flight control actuator of an aircraft, **characterised in that** it includes the following steps:
- collecting, during each flight of the aircraft, series of measurements of parameters relative to the said actuator,
- calculating a set of damage indicators, using, in cumulative fashion, the series of measurements observed during each of the aircraft's successive flights, and
- recording the said set of damage indicators in a non-volatile memory physically integrated in the actuator.
